# EUROPEAN PATENT SPECIFICATION

(11) **EP 2 941 952 B1**
(45) Date of publication and mention of the grant of the patent: **27.07.2022**
(21) Application number: 15163820.2
(22) Date of filing: 16.04.2015
(51) Int. Cl.: A01G 9/14, A01G 9/24

(54) **GREENHOUSE PROVIDED WITH VENTILATION SYSTEM**
GEWÄCHSHAUS MIT BELÜFTUNGSSYSTEM
SERRE MUNIE D'UN SYSTÈME DE VENTILATION

(30) Priority: 07.05.2014 NL 2012777
(43) Date of publication of application: 11.11.2015
(73) Proprietor: Van der Ende Pompen B.V., 2676 CW Maasdijk (NL)
(72) Inventor: Van der Wijden, Arie Thomas, 2676 DK Maasdijk (NL); Van der Kooij, Anthonie Izak, 2676 VE Maasdijk (NL)
(74) Representative: Luten, Martin Haaije

(56) References cited:
- WO-A1-2007/079774
- WO-A2-2009/060436
- FR-A2- 2 213 001
- US-A- 4 069 593
- US-A- 4 313 420

## Description

The invention relates to an agricultural and/or horticultural greenhouse for cultivating crops therein, wherein at least a part of the greenhouse is provided close to the upper side with at least one horizontally suspended fabric screen which defines in that part a cultivation space for cultivating crops therein under the fabric screen and a ridge space separated from the cultivation space, wherein the fabric screen comprises at least one passage between the ridge space and the cultivation space, wherein the greenhouse further comprises a ventilation system with air displacing means for displacing air in the cultivation space of the greenhouse. The invention also relates to a method for controlling the climate in a cultivation space of a greenhouse and air displacing means for use in a greenhouse.

Particularly in the case of modern, high greenhouses it is a problem that the heat supplied to the greenhouse for the purpose of creating good conditions for the growth of the crops accumulates in the upper part, i.e. close to the ridge, of the greenhouse while the lower part, i.e. where the crop is growing, must be additionally heated in order to maintain an optimum temperature.

In order to prevent this loss of heat from the lower part to the upper part of the greenhouse it is known to suspend fabric screens above the crops. These fabric screens generally embodied in textile are suspended horizontally and define a ridge space on the upper side and a cultivation space, where the crops can be cultivated, below this fabric screen. The fabric screens generally extend over the whole area of the greenhouse, so providing for an efficient separation of these two spaces.

Although such a system provides an improved heat insulation, there is the problem that, due to the separating action of the fabric screen, the moisture is also isolated in the cultivation space so that the air humidity rises in the cultivation space. In order to reduce this air humidity it is known to arrange passages in the fabric screen in order to supply relatively dry air from the ridge space to the cultivation space.

The displacement of this air from the ridge space to the cultivation space does then however require additional air displacing means as well as the air displacing means already present for the purpose of circulating air in the cultivation space.

WO 2007/07977 A1 discloses a greenhouse comprising a double layered component. A void space is defined between the inner layer and the outer layer. The greenhouse comprises means for extracting air from the void space.

It is therefore an object, among others, of the present invention to provide an efficient agricultural and/or horticultural greenhouse in which the climate can be controlled in simple and/or efficient manner and wherein the above stated problems are at least partially solved.

This and other objects are achieved with an agricultural and/or horticultural greenhouse according to claim 1. This and other objects are more specifically achieved with an agricultural and/or horticultural greenhouse for cultivating crops therein, wherein at least a part of the greenhouse is provided close to the upper side with at least one horizontally suspended fabric screen which defines in that part a cultivation space for cultivating crops therein under the fabric screen and a ridge space separated from the cultivation space, wherein the fabric screen comprises at least one passage between the ridge space and the cultivation space, wherein the greenhouse further comprises a ventilation system with air displacing means for displacing air in the cultivation space of the greenhouse, wherein at least one of the air displacing means is situated close to the passage in the fabric screen and is configured to draw in and subsequently displace air from both the ridge space and the cultivation space.

According to the invention the air displacing means, according to claim 13, have a divided function of drawing in air from the ridge space (ventilation) as well as drawing in air from the cultivation space (circulation) and subsequently distributing this air in the cultivation space, this resulting in a compact and efficient assembly. The air displacing means preferably embodied as fan are for this purpose placed and configured to draw in air, for instance through the venturi effect, through the passage out of the ridge space and to draw in air out of the cultivation space and subsequently circulate this air in the cultivation space.

Although reference is made in the context of this application to a ventilation system, it should be appreciated that this term also comprises a system wherein air is drawn in and distributed in the greenhouse, this being referred to in the field as circulation as already noted above.

Although it is possible for the air displacing means to be located upstream of the passage as seen in the direction of air displacement of the air displacing means, wherein the airflow emitted by the air displacing means along the passage has a suctioning action in the ridge space, an efficient suctioning takes place when the passage is situated in the suctioning area/range of the air displacing means.

The air displacing means are preferably disposed here such that an inlet side of the air displacing means for drawing in air is oriented toward the passage in the fabric screen. The air displacing means, or at least the inlet side of a possible guide arranged on the air displacing means, extends a short distance from the passage such that air can be drawn in from the ridge spaces, preferably at a flow rate of at least 600 m³/hour. A separate fan arranged in the passage is then not necessary according to the invention.

The ventilation system with the air displacing means can be arranged easily in a greenhouse with a fabric screen when according to a preferred embodiment the air displacing means are situated under the fabric screen and are attached to an attaching system for attaching the fabric screen. Fabric screens are generally connected to a rail or frame system in the greenhouse. When the air displacing means are also attached to this attaching system, no or hardly any additional attaching systems need be arranged in the greenhouse.

In order to achieve a good suction from both the ridge space and the cultivation space it is advantageous for the air displacing means to be located directly under the fabric screen. The air displacing means are preferably configured to draw in, and preferably also displace air from a horizontal direction. The air displacing means are then preferably situated close to the outflow opening of the passage so that with air displacing means embodied for instance as single fan, air from both the ridge space and from the cultivation spaces can be drawn in and displaced.

In order to improve the suction from the spaces, according to a further preferred embodiment the air displacing means comprise a housing, wherein the passage through the fabric screen debouches in a first inlet of the housing and wherein the housing also comprises a second inlet which is in contact with the cultivation space and wherein the air displacing means are configured to discharge the air out of the housing through an outlet. The suction action of the air displacing means is in this way concentrated on the first and/or the second inlet, and the air drawn into the housing can be efficiently discharged from the outlet. With the exception of the two inlets and the outlet the housing preferably encloses a closed space. The housing is for instance provided with walls suitable for this purpose.

Although it is possible particularly when a housing is used to arrange the air displacing means in one of the inlets, wherein the air from the other inlet is drawn in by the airflow from the air displacing means, it is particularly advantageous for the air displacing means to be situated downstream of the two inlets in the housing. The air can then be drawn in efficiently from the two inlets to the suction side of the air displacing means and subsequently emitted through the outlet of the housing.

For efficient control of the climate in the greenhouse, in particular the climate in the cultivation space, and more particularly the relative humidity in this space, it is advantageous when the airflow from the ridge space to the cultivation space can be controlled. Although it is possible for this control to take place by adjusting the rotation speed of the air displacing means, this has the drawback that the circulation in the cultivation space then also becomes dependent on this requirement. Provided for this purpose according to a further preferred embodiment is a flap in the passage for at least partially closing this passage. Depending on the position of the flap, the airflow from the ridge space to the cultivation space can be efficiently controlled without adjusting the power of the air displacing means which are for instance already present in a greenhouse and which also serve as circulation system in the cultivation space. The flap is preferably provided here with a drive for remotely driving the flap for the purpose of opening and closing this flap.

It is moreover advantageous that the airflow from the outlet to the housing can be set by adjusting the mixing ratio of the air from the cultivation space and the ridge space. Both the first and the second inlets can be provided for this purpose with a flap, wherein the airflow from the outlet can be adjusted by setting the positions of the flaps.

It is particularly advantageous when a flap is situated between the first and the second inlet of the housing and is movable between a first position, in which the first inlet is closed, and a second position in which the second inlet is closed. In the first position no suction takes place from the ridge space, while in the second position no suction takes place from the cultivation space. The airflow from the air displacing means can be efficiently controlled, particularly in respect of air humidity, by adjusting the flap between these two positions. The airflows from the ridge space and the cultivation space are preferably mixed in the housing in order to obtain an airflow of the desired air humidity. It is moreover then possible to modify the mixing ratio with a single flap.

As already noted, the air in the ridge space generally has a relatively low air humidity, while it can be a problem that the air in the cultivation space has too high a relative humidity. By now controlling the inflow of air from the ridge space using the flap, the air humidity in the cultivation space can be set to a predetermined air humidity. According to a further preferred embodiment, the greenhouse comprises for this purpose a control system for at least partially opening and closing the flap subject to an air humidity measured in the cultivation space. The control system can for instance control an above described drive for the purpose of moving the flap. The control system preferably also comprises at least one air humidity sensor in the cultivation space for measuring the air humidity in the cultivation space, subject to which the control system can control the flap. It is moreover advantageous here for an air humidity sensor to be also situated in the ridge space, wherein the control system is configured to control the flap subject to the air humidity in both the ridge space and the cultivation space.

The invention is however not limited to control on the basis of (only) air humidity. Control can thus also take place on the basis of other climate parameters, such as temperature. The greenhouse comprises for this purpose a control system for at least partially opening and closing the flap subject to a climate parameter, for instance the temperature, measured in the cultivation space. A suitable sensor can then again also be provided in the ridge space.

The invention also relates to a method for controlling the climate in a cultivation space under a fabric screen in an agricultural and/or horticultural greenhouse, according to claim 10, wherein the fabric screen comprises a passage between the cultivation space and a ridge space above the fabric screen, comprising the steps of:
- drawing in air from the ridge space with air displacing means; and/or
- drawing in air from the cultivation space with said air displacing means;
- displacing the indrawn air in the cultivation space.

An efficient ventilation system is provided by drawing in air from the cultivation space and the ridge space using the same air displacing means.

The method preferably also comprises of selectively drawing in air from the ridge space and/or the cultivation space with the air displacing means subject to a predetermined air humidity and/or temperature in the cultivation space. Depending on the requirement in the cultivation space, more relatively dry and/or cooler air can then be supplied to the cultivation space from the ridge space, or it is even possible to opt not to draw any air from this ridge space if the air humidity or temperature in the cultivation space is already sufficiently low.

A further preferred embodiment of the method for controlling the climate in a greenhouse according to the invention further comprises the step of measuring the air humidity in the cultivation space and moving the flap subject to this measured air humidity for the purpose of obtaining a predetermined air humidity in the cultivation space. The position of the flap can then be set subject to a measured air humidity and a predetermined target air humidity. If the air humidity in the cultivation space is too high, suctioning of air from the ridge space can be increased, in particular by moving the flap from the first position further toward the second position so that the opening through the passage through the fabric screen is enlarged. The airflows from the ridge space and the cultivation space are then mixed to form an airflow with a predetermined air humidity. As already noted above, control is also possible on the basis of other climate parameters such as temperature.

The invention further relates to air displacing means for use in an agricultural and/or horticultural greenhouse according to the invention, wherein the air displacing means comprise a housing with a first inlet and a second inlet and wherein the air displacing means are configured to discharge air from at least one of the inlets out of the housing through an outlet, wherein the displacing means also comprise a flap between first and second inlet which is movable between a first position, in which the first inlet is closed, and a second position in which the second inlet is closed. The air displacing means arranged in the housing can then be efficiently arranged close to a passage in a fabric screen. The air displacing means preferably comprise for this purpose attaching means for attaching the air displacing means to the attaching system for the fabric screen.

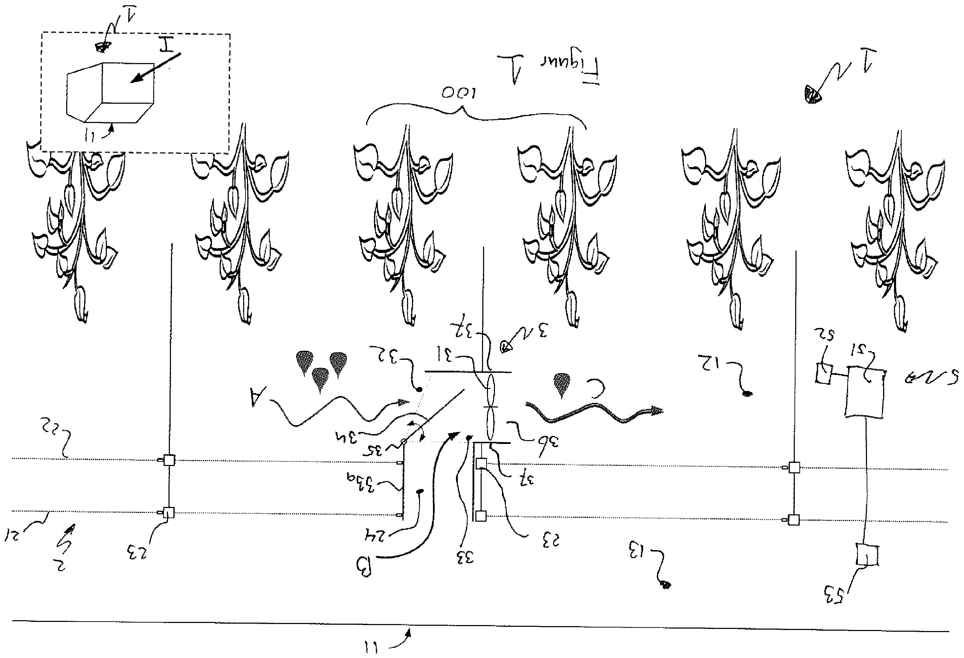

The present invention is further illustrated with reference to the following figure which shows a preferred embodiment of the agricultural and/or horticultural greenhouse according to invention but which is not intended to limit the scope of the invention in any way, wherein figure 1 shows a schematic cross section of an agricultural and/or horticultural greenhouse.

Figure 1 shows schematically a greenhouse 1 from a direction I, see the overall view in the lower right corner of figure 1. The greenhouse is provided with a ridge 11 and crops 100 are growing close to the lower side. Arranged above crops 100 is insulation 2 in the form of fabric screens 21, 22. Fabric screens 21 and 22 are fabrics of textile which are suspended horizontally below ridge 11 between the attachment system indicated schematically with 23. Fabric screens 21, 22 divide the space in greenhouse 1 into a ridge space 13 above the fabric screens and a cultivation space 12 below fabric screens 21, 22.

The relative humidity in cultivation space 12 is generally higher than that in ridge space 13, so that a passage 24 is provided through fabric screens 21, 22. Relatively dry air can then be supplied from ridge space 13 as according to an arrow B to cultivation space 12.

Further arranged in cultivation space 12 is a ventilation system, a fan 31 of which is shown in figure 1. Fan 31 is disposed horizontally for displacing air in the cultivation space in a horizontal direction, indicated schematically with arrows A and C. In order to make it possible to draw in air from ridge space 13 (arrow B) as well as air from cultivation space 12 (arrow A) with a single fan 31, the fan 31 is situated directly under the lower fabric screen 22 and close to passage 24 through fabric screens 21, 22. Passage 24 is located here in the suction range of fan 31.

The suction from ridge space 13 is improved in that fan 31 is placed in a housing 3, wherein housing 3 comprises an inlet 33 connected to passage 24 through fabric screens 21, 22. In this embodiment the passage 24 is therefore formed by a tube 33a which connects directly to a side wall 37 of housing 3. The outer end 36 close to fan 31 of housing 3 forms the outlet 36 of housing 3 while the opposite open end forms a second inlet 32 for air from cultivation space 12. With the exception of inlets 32, 33 and outlet 36, housing 3 here encloses a closed space. Housing 3 is suspended from the attachment system 23 on which fabric screens 21, 22 are also arranged.

Arranged between inlets 32 and 33 is a movable flap 34. Flap 34 pivots about an axis indicated with 35 and is movable (see the broken lines) between a position in which inlet 33 is closed to air from ridge space 13 and a position in which inlet 32 is closed to air from cultivation space 12. Flap 34 can moreover be placed in any of the intermediate positions. The flap is provided for this purpose with a drive indicated schematically with 35.

By varying the position of the flap 34 the source of the air drawn in by fan 31 can be controlled. When the air humidity in cultivation space 12 is relatively high, indicated with the three droplets at arrow A, it is possible to opt to draw in more air from the relatively dry ridge space 13. Flap 34 will then be moved in a counterclockwise direction in figure 1. If on the other hand the air in ridge space 12 is relatively dry, it is then possible to opt to limit the supply of air from ridge space 13 by rotating flap 34 in a clockwise direction in figure 1 or to even close inlet 33 completely with flap 34, as also shown in a broken line.

Provided for the control of drive 35 is a control system designated schematically with 5. Such a control system can for instance be part of or formed by a climate computer as is often already present in a greenhouse. This control system 5 is provided with a central controller 51 which is connected to an air humidity sensor 53 in ridge space 13 and to an air humidity sensor 52 in cultivation space 12. Subject to an air humidity in cultivation space 12 measured by sensor 32 and a preset ideal air humidity for the crops 100 for cultivating, the central controller 51 can set the position of flap 34 using drive 35. The system can moreover be configured to set the flap subject to the temperature measured in the cultivation space and/or the ridge space for the purpose of providing an airflow of a desired temperature. The greenhouse is then provided with temperature sensors suitable for this purpose.

The invention is not limited to the embodiment shown in this example but also extends to variants falling within the scope of the appended claims. It will be apparent that the invention is not limited to a determined number of fabric screens. Although in the example two fabric screens are arranged one above the other, it is equally possible to suspend a single fabric screen or even more than two fabric screens in the greenhouse.

## Claims

1. Agricultural and/or horticultural greenhouse (1) for cultivating crops (100) therein, wherein at least a part of the greenhouse is provided close to the upper side with at least one horizontally suspended fabric screen (21, 22) which defines in that part a cultivation space (12) for cultivating crops (100) therein under the fabric screen (21, 22) and a ridge space (13) separated from the cultivation space (12), **characterized in that** the fabric screen (21, 22) comprises at least one passage (24) between the ridge space (13) and the cultivation space (12), wherein the greenhouse (1) further comprises a ventilation system with air displacing means (31) for displacing air in the cultivation space (12) of the greenhouse (1), wherein at least one of the air displacing means (31) is situated close to the passage in the fabric screen (21, 22) and is configured to draw in and subsequently displace air from both the ridge space (13) and the cultivation space (12).

2. Agricultural and/or horticultural greenhouse as claimed in claim 1, wherein the air displacing means (31) are situated under the fabric screen (21, 22) and are attached to an attaching system (23) for attaching the fabric screen (21, 22).

3. Agricultural and/or horticultural greenhouse (1) as claimed in claim 1 or 2, wherein the air displacing means (31) comprise a housing (3), wherein the passage (24) through the fabric screen (21, 22) debouches in a first inlet (33) of the housing (3) and wherein the housing (3) also comprises a second inlet (32) which is in contact with the cultivation space (12) and wherein the air displacing means are (31) configured to discharge the air out of the housing (3) through an outlet (36).

4. Agricultural and/or horticultural greenhouse (1) as claimed in claim 3, wherein the air displacing means (31) are situated downstream of the two inlets (32, 33) in the housing (3).

5. Agricultural and/or horticultural greenhouse (1) as claimed in any of the foregoing claims, wherein the passage (24) is provided with a flap (34) for closing the passage (24).

6. Agricultural and/or horticultural greenhouse (1) as claimed in at least claims 3 and 5, wherein the flap (34) is situated between the first and the second inlets (32, 33) and is movable between a first position, in which the first inlet (32) is closed, and a second position in which the second inlet (33) is closed.

7. Agricultural and/or horticultural greenhouse (1) as claimed in claim 5 or 6, also comprising a control system (5) for at least partially opening and closing the flap (34) subject to an air humidity measured in the cultivation space (12).

8. Agricultural and/or horticultural greenhouse (1) as claimed in any of the foregoing claims, wherein the air displacing means (31) are configured to displace air substantially horizontally in the cultivation space (12).

9. Agricultural and/or horticultural greenhouse (1) as claimed in any of the foregoing claims, wherein the air displacing means (31) comprise a fan.

10. Method for controlling the climate in a cultivation space (12) under a fabric screen (21, 22) in an agricultural and/or horticultural greenhouse (1) as claimed in any of the foregoing claims, wherein the fabric screen (21, 22) comprises a passage (24) between the cultivation space (12) and a ridge space (13) above the fabric screen (21, 22), comprising the steps of:
- drawing in air from the ridge space (13) with air displacing means (31); and/or
- drawing in air from the cultivation space (12) with said air displacing means (31);
- displacing the indrawn air in the cultivation space (12).

11. Method as claimed in claim 10, also comprising of selectively drawing in air from the ridge space (13) and/or the cultivation space (12) with the air displacing means (31) subject to a predetermined air humidity in the cultivation space (12).

12. Method as claimed in claim 10 or 11 for controlling the climate in a greenhouse (1) as claimed in at least one of the claims 5-7, further comprising the step of measuring the air humidity in the cultivation space (12) and moving the flap (34) subject to this measured air humidity for the purpose of obtaining a predetermined air humidity.

13. Air displacing means for use in an agricultural and/or horticultural greenhouse (1) for cultivating crops (100) therein, wherein at least a part of the greenhouse (1) is provided close to the upper side with at least one horizontally suspended fabric screen (21, 22) which defines in that part a cultivation space (12) for cultivating crops (100) therein under the fabric screen (21, 22) and a ridge space (13) separated from the cultivation space (12), wherein the fabric screen (21, 22) comprises at least one passage (24) between the ridge space (13) and the cultivation space (12), wherein the air displacing means are arranged for displacing air in the cultivation space (12) of the greenhouse, **characterized in that the** air displacing means (31) comprise a housing (3) with a first inlet (33) arranged to debouche in the passage (24) in the fabric screen (21, 22) and a second inlet (32) arranged to be in contact with the cultivation space (12) and wherein the air displacing means are configured to discharge air from at least one of the inlets (32, 33) out of the housing (3) through an outlet (36).

14. Air displacing means according to claim 13, wherein the displacing means also comprise a flap (34) between first and second inlet (32, 33) which is movable between a first position, in which the first inlet (33) is closed, and a second position in which the second inlet (32) is closed.

15. Air displacing means according to claim 14, also comprising a control system (5) for at least partially opening and closing the flap (34) subject to an air humidity measured in the cultivation space (12)

## Patentansprüche

1. Landwirtschaftliches und/oder gartenbauliches Gewächshaus (1) zum Anbau von Kulturpflanzen (100) in diesem, wobei zumindest ein Teil des Gewächshauses nahe der Oberseite mit mindestens einer horizontal aufgehängten Stoffbahn (21, 22) versehen ist, welche in diesem Teil einen Anbauraum (12) zum Anbau von Kulturpflanzen (100) in diesem unter der Stoffbahn (21, 22) sowie einen von dem Anbauraum (12) getrennten Firstraum (13) definiert, **dadurch gekennzeichnet, dass** die Stoffbahn (21, 22) mindestens einen Durchgang (24) zwischen dem Firstraum (13) und dem Anbauraum (12) aufweist, wobei das Gewächshaus (1) weiterhin ein Belüftungssystem mit Luftverschiebungseinrichtungen (31) zum Verschieben von Luft in dem Anbauraum (12) des Gewächshauses (1) aufweist, wobei sich mindestens eine der Luftverschiebungseinrichtungen (31) nahe dem Durchgang in der Stoffbahn (21, 22) befindet und dazu ausgebildet ist, Luft sowohl in den Firstraum (13) als auch in den Anbauraum (12) Luft einzusaugen und anschließend aus diesen zu verschieben.

2. Landwirtschaftliches und/oder gartenbauliches Gewächshaus nach Anspruch 1, wobei sich die Luftverschiebungseinrichtungen (31) unter der Stoffbahn (21, 22) befinden und an einem Befestigungssystem (23) zum Befestigen der Stoffbahn (21, 22) befestigt sind.

3. Landwirtschaftliches und/oder gartenbauliches Gewächshaus (1) nach Anspruch 1 oder 2, wobei die Luftverschiebungseinrichtungen (31) ein Gehäuse (3) aufweisen, wobei der Durchgang (24) durch die Stoffbahn (21, 22) in einen ersten Einlass (33) des Gehäuses (3) mündet und wobei das Gehäuse (3) außerdem einen zweiten Einlass (32) aufweist, der mit dem Anbauraum (12) in Kontakt steht, und wobei die Luftverschiebungseinrichtungen (31) dazu ausgebildet sind, die Luft durch einen Auslass (36) aus dem Gehäuse (3) abzuführen.

4. Landwirtschaftliches und/oder gartenbauliches Gewächshaus (1) nach Anspruch 3, wobei sich die Luftverschiebungseinrichtungen (31) stromabwärts der beiden Einlässe (32, 33) in dem Gehäuse (3) befinden.

5. Landwirtschaftliches und/oder gartenbauliches Gewächshaus (1) nach einem der vorhergehenden Ansprüche, wobei der Durchgang (24) mit einer Klappe (34) zum Verschließen des Durchgangs (24) versehen ist.

6. Landwirtschaftliches und/oder gartenbauliches Gewächshaus (1) zumindest nach den Ansprüchen 3 und 5, wobei sich die Klappe (34) zwischen dem ersten und dem zweiten Einlass (32, 33) befindet und zwischen einer ersten Stellung, in der der erste Einlass (32) geschlossen ist, und einer zweiten Stellung, in der der zweite Einlass (33) geschlossen ist, bewegbar ist.

7. Landwirtschaftliches und/oder gartenbauliches Gewächshaus (1) nach Anspruch 5 oder 6, außerdem mit einer Steuerung (5) zum zumindest teilweisen Öffnen und Verschließen der Klappe (34) in Abhängigkeit einer in dem Anbauraum (12) gemessenen Luftfeuchtigkeit.

8. Landwirtschaftliches und/oder gartenbauliches Gewächshaus (1) nach einem der vorhergehenden Ansprüche, wobei die Luftverschiebungseinrichtungen (31) dazu ausgeführt sind, Luft im Wesentlichen horizontal in dem Anbauraum (12) zu verschieben.

9. Landwirtschaftliches und/oder gartenbauliches Gewächshaus (1) nach einem der vorhergehenden Ansprüche, wobei die Luftverschiebungseinrichtungen (31) einen Ventilator aufweisen.

10. Verfahren zur Steuerung des Klimas in einem Anbauraum (12) unter einer Stoffbahn (21, 22) in einem landwirtschaftlichen und/oder gartenbaulichen Gewächshaus (1) nach einem der vorhergehenden Ansprüche, wobei die Stoffbahn (21, 22) einen Durchgang (24) zwischen dem Anbauraum (12) und einem Firstraum (13) oberhalb der Stoffbahn (21, 22) aufweist, mit den folgenden Schritten:
- Ansaugen von Luft aus dem Firstraum (13) mit Luftverschiebungseinrichtungen (31); und/oder
- Ansaugen von Luft aus dem Anbauraum (12) mit den Luftverschiebungseinrichtungen (31);
- Verschieben der angesaugten Luft in dem Anbauraum (12).

11. Verfahren nach Anspruch 10, außerdem mit einem selektiven Ansaugen von Luft aus dem Firstraum (13) und/oder dem Anbauraum (12) mit den Luftverschiebungseinrichtungen (31) in Abhängigkeit einer vorgegebenen Luftfeuchtigkeit in dem Anbauraum (12).

12. Verfahren nach Anspruch 10 oder 11, zur Steuerung des Klimas in einem Gewächshaus (1) nach mindestens einem der Ansprüche 5-7, weiterhin mit dem Schritt des Messens der Luftfeuchtigkeit in dem Anbauraum (12) und des Bewegens der Klappe (34) in Abhängigkeit dieser gemessenen Luftfeuchtigkeit, um eine vorgegebene Luftfeuchtigkeit zu erzielen.

13. Luftverschiebungseinrichtungen zur Verwendung in einem landwirtschaftlichen und/oder gartenbaulichen Gewächshaus (1) zum Anbau von Kulturpflanzen (100) in diesem, wobei zumindest ein Teil des Gewächshauses (1) nahe der Oberseite mit mindestens einer horizontal aufgehängten Stoffbahn (21, 22) versehen ist, welche in diesem Teil einen Anbauraum (12) zum Anbauen von Kulturpflanzen (100) in diesem unter der Stoffbahn (21, 22) sowie einen von dem Anbauraum (12) getrennten Firstraum (3) definiert, wobei die Stoffbahn (21, 22) mindestens einen Durchgang (24) zwischen dem Firstraum (13) und dem Anbauraum (12) aufweist, wobei die Luftverschiebungseinrichtungen zum Verschieben von Luft in dem Anbauraum (12) des Gewächshauses angeordnet sind, **dadurch gekennzeichnet, dass** die Luftverschiebungseinrichtungen (31) ein Gehäuse (3) mit einem ersten Einlass (33), der so angeordnet ist, dass er in dem Durchgang (24) in der Stoffbahn (21, 22) mündet, und einem zweiten Einlass (32) aufweisen, der so angeordnet ist, dass er mit dem Anbauraum (12) in Kontakt steht, und wobei die Luftverschiebungseinrichtungen so ausgebildet sind, dass sie Luft aus mindestens einem der Einlässe (32, 33) durch einen Auslass (36) aus dem Gehäuse (3) abführen.

14. Luftverschiebungseinrichtungen nach Anspruch 13, wobei die Verschiebungseinrichtungen außerdem eine Klappe (34) zwischen dem ersten und dem zweiten Einlass (32, 33) aufweisen, welche zwischen einer ersten Stellung, in der der erste Einlass (33) geschlossen ist, und einer zweiten Stellung, in der der zweite Einlass (32) geschlossen ist, bewegbar ist.

15. Luftverschiebungseinrichtungen nach Anspruch 14, weiterhin mit einem Steuerungs-System (5) zum zumindest teilweisen Öffnen und Verschließen der Klappe (34) in Abhängigkeit einer in dem Anbauraum (12) gemessenen Luftfeuchtigkeit.

## Revendications

1. Serre agricole et/ou horticole (1) destinée à cultiver des plantes (100) à l'intérieur, dans laquelle au moins une partie de la serre comporte, à proximité de la face supérieure, au moins un écran de tissu (21, 22) suspendu horizontalement qui définit dans cette partie un espace de culture (12) destiné à cultiver les plantes (100) à l'intérieur, au-dessous de l'écran de tissu (21, 22) et un espace de faîtage (13) séparé de l'espace de culture (12), **caractérisée en ce que** l'écran de tissu (21, 22) comprend au moins un passage (24) entre l'espace de faîtage (13) et l'espace de culture (12), dans laquelle la serre (1) comprend, en outre, un dispositif de ventilation avec des moyens de déplacement d'air (31) afin de déplacer l'air dans l'espace de culture (12) de la serre (1), dans laquelle au moins l'un des moyens de déplacement d'air (31) est situé à proximité du passage sur l'écran de tissu (21, 22) et est configuré de manière à aspirer et à déplacer consécutivement de l'air à la fois à partir de l'espace de faîtage (13) et de l'espace de culture (12).

2. Serre agricole et/ou horticole selon la revendication 1, dans laquelle les moyens de déplacement d'air (31) sont situés au-dessous de l'écran de tissu (21, 22) et sont fixés à un dispositif de fixation (23) de manière à fixer l'écran de tissu (21, 22).

3. Serre agricole et/ou horticole (1) selon la revendication 1 ou 2, dans laquelle les moyens de déplacement d'air (31) comprennent un boîtier (3), dans laquelle le passage (24) à travers l'écran de tissu (21, 22) débouche dans un premier orifice d'entrée (33) du boîtier (3) et dans laquelle le boîtier (3) comprend aussi un second orifice d'entrée (32) qui est en contact avec l'espace de culture (12) et dans laquelle les moyens de déplacement d'air (31) sont configurés de manière à évacuer l'air hors du boîtier (3) à travers un orifice de sortie (36).

4. Serre agricole et/ou horticole (1) selon la revendication 3, dans laquelle les moyens de déplacement d'air (31) sont situés en aval des deux orifices d'entrée (32, 33) dans le boîtier (3).

5. Serre agricole et/ou horticole (1) selon l'une quelconque des revendications précédentes, dans laquelle le passage (24) comporte un volet (34) afin d'obturer le passage (24).

6. Serre agricole et/ou horticole (1) selon au moins les revendications 3 et 5, dans laquelle le volet (34) est situé entre les premier et second orifices d'entrée (32, 33) et peut être déplacé entre une première position, dans laquelle le premier orifice d'entrée (32) est obturé, et une seconde position dans laquelle le second orifice d'entrée (33) est obturé.

7. Serre agricole et/ou horticole (1) selon la revendication 5 ou 6, comprenant aussi un dispositif de commande (5) destiné à au moins partiellement ouvrir et fermer le volet (34) en fonction d'une humidité de l'air mesurée dans l'espace de culture (12).

8. Serre agricole et/ou horticole (1) selon l'une quelconque des revendications précédentes, dans laquelle les moyens de déplacement d'air (31) sont configurés de manière à déplacer l'air sensiblement horizontalement dans l'espace de culture (12).

9. Serre agricole et/ou horticole (1) selon l'une quelconque des revendications précédentes, dans laquelle les moyens de déplacement d'air (31) comprennent un ventilateur.

10. Procédé de commande de climatisation dans un espace de culture (12) au-dessous d'un écran de tissu (21, 22) dans une serre agricole et/ou horticole (1) selon l'une quelconque des revendications précédentes, dans lequel l'écran de tissu (21, 22) comprend un passage (24) entre l'espace de culture (12) et un espace de faîtage (13) au-dessus de l'écran de tissu (21, 22), comprenant les étapes de :
aspiration de l'air à partir de l'espace de faîtage (13) avec des moyens de déplacement d'air (31) ; et/ou
aspiration de l'air à partir de l'espace de culture (12) avec lesdits moyens de déplacement d'air (31) ;
déplacement de l'air aspiré dans l'espace de culture (12).

11. Procédé selon la revendication 10, comprenant aussi l'aspiration de manière sélective de l'air à partir de l'espace de faîtage (13) et/ou de l'espace de culture (12) avec les moyens de déplacement d'air (31) en fonction d'une humidité d'air prédéterminée dans l'espace de culture (12).

12. Procédé selon la revendication 10 ou 11 destiné à commander la climatisation dans une serre (1) selon au moins l'une des revendications 5 à 7, comprenant, en outre, l'étape de mesure de l'humidité de l'air dans l'espace de culture (12) et de déplacement du volet (34) en fonction de cette humidité d'air mesurée afin d'obtenir une humidité d'air prédéterminée.

13. Moyen de déplacement d'air destiné à être utilisé dans une serre agricole et/ou horticole (1) afin de cultiver des plantes (100) à l'intérieur, dans lequel au moins une partie de la serre (1) comporte, à proximité de la face supérieure au moins un écran de tissu (21, 22) suspendu horizontalement qui définit dans cette partie un espace de culture (12) destiné à cultiver des plantes (100) à l'intérieur au-dessous de l'écran de tissu (21, 22) et un espace de faîtage (13) séparé de l'espace de culture (12), dans lequel l'écran de tissu (21, 22) comprend au moins un passage (24) entre l'espace de faîtage (13) et l'espace de culture (12), dans lequel les moyens de déplacement d'air sont agencés afin de déplacer l'air dans l'espace de culture (12) de la serre, **caractérisé en ce que** les moyens de déplacement d'air (31) comprennent un boîtier (3) avec un premier orifice d'entrée (33) agencé afin de déboucher dans le passage (24) sur l'écran de tissu (21, 22) et un second orifice d'entrée (32) agencé de manière à entrer en contact avec l'espace de culture (12) et dans lequel les moyens de déplacement d'air sont configurés de manière à évacuer l'air à partir d'au moins l'un des orifices d'entrée (32, 33) hors du boîtier (3) à travers un orifice de sortie (36).

14. Moyen de déplacement d'air selon la revendication 13, dans lequel les moyens de déplacement comprennent aussi un volet (34) entre les premier et second orifices d'entrée (32, 33) qui peut être déplacé entre une première position, dans laquelle le premier orifice d'entrée (33) est fermé et une seconde position dans laquelle le second orifice d'entrée (32) est fermé.

15. Moyen de déplacement d'air selon la revendication 14, comprenant aussi un dispositif de commande (5) destiné à au moins partiellement ouvrir et fermer le volet (34) en fonction d'une humidité de l'air mesurée dans l'espace de culture (12).
